# FASCICULE DE BREVET EUROPEEN

(11) **EP 2 038 798 B1**
(45) Date de publication et mention de la délivrance du brevet: **18.04.2018**
(21) Numéro de dépôt: 07803999.7
(22) Date de dépôt: 09.07.2007
(51) Int. Cl.: G06F 21/55

(54) **PROTECTION D'UN PROGRAMME INTERPRETE PAR UNE MACHINE VIRTUELLE**
SCHUTZ EINES MITTELS VIRTUELLER MASCHINE INTERPRETIERTEN PROGRAMMS
PROTECTION OF A PROGRAM INTERPRETED BY A VIRTUAL MACHINE

(30) Priorité: 10.07.2006 FR 0606271
(43) Date de publication de la demande: 25.03.2009
(73) Titulaire: MORPHO, 92130 Issy-Les-Moulineaux (FR)
(72) Inventeur: PELLETIER, Hervé, F-75015 Paris (FR); KOCOGLU, Osman, F-75015 Paris (FR)
(74) Mandataire: Cabinet Plasseraud
(86) Numéro de dépôt international: PCT/FR2007/051620
(87) Numéro de publication internationale: WO 2008/007009

(56) Documents cités:
- EP-A- 1 496 420
- WO-A-99/01815
- WO-A2-2005/111761

## Description

La présente invention concerne la protection d'un programme interprété par une machine virtuelle. Elle concerne en particulier un procédé de protection du programme et un dispositif de type machine virtuelle qui est adapté pour mettre en oeuvre un tel procédé.

La protection recherchée vise en particulier à empêcher une ingénierie inverse du programme, appelée «reverse engineering» en anglais. Une ingénierie inverse a pour but d'identifier la conception du programme pour le copier, le modifier ou le détourner, le plus souvent sans l'accord des auteurs et/ou détenteurs de celui-ci.

Une machine virtuelle est un dispositif informatique qui est capable d'exécuter un programme enregistré sous forme d'une succession d'instructions, et qui, lors d'une exécution du programme, traduit chaque instruction en une séquence d'opérations élémentaires et exécute chacune de ces opérations. Une telle machine permet de dissocier l'interface au moyen de laquelle le programme est enregistré ou transmis, de la plate-forme qui réalise les opérations élémentaires.

L'invention peut être appliquée en particulier à la protection d'un programme qui est rédigé en langage Java-Card. Un tel programme est appelé applet et les instructions qui le constituent sont des op-codes, pour «opération code», dans le jargon Java-Card.

Dans de nombreux domaines qui utilisent des programmes informatiques pour accomplir des tâches particulières, il est nécessaire de protéger ces programmes pour empêcher qu'ils puissent être modifiés en dehors de leur conception initiale ou de leur destination officielle. De tels programmes peuvent être utilisés pour la communication de données, notamment de données confidentielles, pour l'exécution d'opérations bancaires, dans le domaine des jeux électroniques, etc. Les successions d'instructions qui constituent ces programmes doivent donc être maintenues secrètes, afin d'éviter que certaines de ces instructions puissent être modifiées pour détourner le programme, ou pour changer un résultat produit lors d'une exécution du programme.

Or il est possible de retrouver la succession des instructions qui constituent un programme en détectant des variations de certaines grandeurs physiques qui sont provoquées par l'exécution du programme dans un dispositif électronique. Ces grandeurs physiques peuvent être, notamment, la consommation électrique du dispositif, ou le champ électromagnétique qui est produit par le dispositif. Dans le jargon de l'Homme du métier, ces grandeurs physiques qui permettent d'identifier les instructions d'un programme à partir d'une exécution de celui-ci sont appelées «canaux cachés», ou «side-channels» en anglais.

Pour retrouver les instructions d'un programme qui sont inconnues initialement, il est donc possible de disposer des détecteurs de champ à proximité du dispositif qui exécute le programme, et de mesurer en temps réel pendant l'exécution du programme les variations du champ électromagnétique qui sont provoquées par les opérations réalisées par le dispositif. Des séquences de variations du champ sont ainsi détectées, qui peuvent être ensuite comparées à des séquences de variations préalablement répertoriées. De cette façon, les instructions successives qui constituent le programme peuvent être identifiées une à une. Le programme ainsi révélé sous la forme de la succession des instructions, peut alors être modifié, notamment à des fins frauduleuses ou mal intentionnées. Les instructions du programme peuvent être identifiées de façon similaire en détectant les variations de consommation électrique du dispositif qui sont provoquées par les opérations réalisées pendant une exécution du programme.

Il est connu de rendre plus difficile l'identification des instructions du programme à partir des canaux cachés en commandant la réalisation d'opérations supplémentaires lors de l'exécution du programme. De telles opérations supplémentaires ne participent pas à l'obtention d'un résultat de l'exécution du programme, et n'ont qu'une fonction de brouillage des canaux cachés. Mais, l'addition d'opérations supplémentaires qui ne dépendent que de l'instruction qui est en cours d'exécution ne provoque aucun brouillage efficace par rapport à une identification des instructions effectuée à partir de séquences répertoriées de variations des canaux cachés.

Pour cette raison, il est aussi connu d'effectuer un brouillage en commandant la réalisation d'opérations supplémentaires lors de l'exécution du programme, qui sont sélectionnées aléatoirement. Les variations significatives des canaux cachés, qui correspondent aux opérations réellement liées au résultat de l'exécution du programme, sont alors réparties parmi des variations qui correspondent aux opérations inutiles par rapport au résultat, mais qui sont réalisées pour brouiller les variations significatives. Mais les variations significatives peuvent encore être isolées en exécutant le programme un grand nombre de fois, et en réalisant une moyenne et/ou une corrélation des variations des canaux cachés qui sont détectées lors d'exécutions successives du programme. En effet, du fait de leur nature aléatoire, les instructions supplémentaires qui sont ajoutées pour le brouillage engendrent des contributions nulles aux moyennes et/ou corrélations effectuées. Les instructions du programme peuvent donc encore être identifiées, malgré le brouillage.

En particulier, le document EP 1 496 420, correspondant à US 2003/0110390, divulgue d'ajouter des instructions supplémentaires qui sont déterminées de façon purement aléatoire ou déterministe.

Un but de la présente invention est donc de protéger de façon efficace un programme interprété par une machine virtuelle, en empêchant l'identification des instructions de ce programme par ingénierie inverse.

Pour cela, l'invention propose un procédé de protection d'un programme interprété par une machine virtuelle, ce programme comprenant une succession d'instructions et chaque instruction étant traduite en une séquence d'opérations réalisées par la machine lors d'une exécution du programme, le procédé comprenant les étapes suivantes :
- obtenir un condensé du programme ; et
- introduire, dans les séquences d'opérations qui correspondent respectivement à certaines au moins des instructions du programme, des opérations supplémentaires à réaliser lors de l'exécution de ces instructions, ces opérations supplémentaires ne participant pas à un résultat de l'exécution du programme et étant sélectionnées en fonction

du condensé du programme de sorte que lesdites opérations supplémentaires qui sont introduites soient constantes entre deux exécutions successives dudit programme. Ainsi, selon l'invention, les opérations supplémentaires de brouillage ne sont pas aléatoires mais sont déterminées à partir d'un condensé du programme. Il est rappelé qu'un condensé d'une succession d'instructions ou de données est construit en utilisant une fonction de hachage, et possède les propriétés suivantes :
/1/ il est établi d'une façon déterministe et reproductible à partir de la succession d'instructions ou de données ;
/2/ Il est improbable que deux successions d'instructions ou de données qui sont différentes aboutissent à des condensés identiques ; et
/3/ il est impossible de retrouver les instructions ou données initiales à partir du condensé.

Grâce à la propriété /1/ du condensé, les opérations supplémentaires qui sont introduites lors de l'exécution du programme pour brouiller les canaux cachés sont constantes, entre deux exécutions successives d'un même programme. Par conséquent, ces opérations supplémentaires de brouillage contribuent à une analyse statistique des variations des canaux cachés qui sont recueillies lors d'exécutions répétées d'un même programme, d'une façon identique aux opérations utiles pour l'obtention d'un résultat produit par le programme. Autrement dit, les opérations supplémentaires de brouillage ne peuvent pas être distinguées des opérations utiles lors d'exécutions répétées d'un même programme.

En outre, grâce à la propriété /2/ du condensé, les opérations supplémentaires qui sont introduites dans des séquences d'opérations qui correspondent à une même instruction utilisée dans deux programmes différents, sont différentes. Il n'est donc pas possible d'établir une correspondance entre une instruction et une séquence de variations de canaux cachés à partir de plusieurs programmes. Autrement dit, une même instruction possède une signature de canaux cachés qui varie en fonction du programme dans lequel cette instruction est utilisée.

L'invention procure donc une protection efficace contre l'identification des instructions d'un programme à partir des canaux cachés. Elle empêche ainsi toute tentative d'ingénierie inverse visant à découvrir le programme.

Un premier avantage de l'invention résulte de l'utilisation d'un condensé d'un programme, qui est très bien maîtrisée à ce jour, à la fois théoriquement et pratiquement.

Un deuxième avantage de l'invention résulte du fait que la protection obtenue ne nécessite pas de modifier la forme ni le code du programme tel qu'il est enregistré ou transmis au dispositif de machine virtuelle qui est destiné à l'exécuter. En particulier, la tâche d'un programmeur du dispositif n'est pas modifiée par un procédé de protection selon l'invention, car cette protection est introduite en aval de la conception et de la saisie du programme sous forme d'une succession d'instructions.

Un troisième avantage de l'invention résulte du fait que le procédé de protection ne requiert pas de dispositifs annexes de brouillage des canaux cachés, tels que des générateurs de bruit.

L'invention concerne aussi un dispositif de type machine virtuelle qui comporte des moyens d'exécution d'une succession d'instructions d'un programme, ces moyens d'exécution comprenant :
- des moyens de lecture d'une instruction du programme ;
- des moyens de traduction de l'instruction lue en une séquence d'opérations à réaliser par le dispositif lors d'une exécution du programme ; et
- des moyens de réalisation des opérations de la séquence qui correspond à l'instruction traduite,
- des moyens d'obtention d'une partie au moins d'un condensé du programme ; et
- des moyens de sélection d'opérations supplémentaires qui ne participent pas à un résultat de l'exécution du programme, ces moyens de sélection étant agencés pour sélectionner les opérations supplémentaires en fonction d'une partie du condensé du programme,
et pour les introduire dans la séquence d'opérations à réaliser par le
dispositif lors de l'exécution du programme, de sorte que lesdites opérations supplémentaires qui sont introduites soient constantes entre deux exécutions successives dudit programme. Un tel dispositif, qui procure une protection des programmes exécutés au moyen de celui-ci, peut être utile dans de nombreux domaines. En particulier, le dispositif peut être incorporé dans un équipement mobile de communication, une étiquette d'identification sans contact, un lecteur d'étiquette d'identification sans contact, une carte à puce, un lecteur de telles cartes à puces, un système de contrôle d'accès, etc. A titre d'exemples, des cartes à puces dans lesquelles l'invention peut être avantageusement mise en oeuvre sont notamment des cartes à puces de santé, des cartes à puces d'identité ou de passeport, des cartes à puces bancaires, des cartes à puces de contrôle d'accès ou des cartes à puces supports de jeux électroniques.

Eventuellement, les moyens de sélection des opérations supplémentaires peuvent être adaptés pour les sélectionner dans un ensemble d'opérations prédéfini. Cette sélection peut être effectuée, en particulier, en fonction de segments successifs du condensé, en reprenant le condensé en boucle si nécessaire lorsque le segment de condensé utilisé dépasse la fin du condensé. Un tel mode de mise en oeuvre de l'invention est simple à programmer lors de la conception du dispositif de machine virtuelle.

Selon deux modes de mise en oeuvre différents de l'invention, le dispositif de machine virtuelle peut comprendre des moyens pour produire le condensé du programme, ou des moyens pour recevoir le condensé de la part d'une source externe.

D'autres particularités et avantages de la présente invention apparaîtront dans la description ci-après d'un exemple de mise en oeuvre non limitatif. Cette description est présentée en référence aux figures suivantes :
- la figure 1 est un diagramme qui illustre le principe de mise en oeuvre d'une protection de programme réalisée selon l'invention ; et
- la figure 2 illustre une architecture de machine virtuelle adaptée pour mettre en oeuvre l'invention.

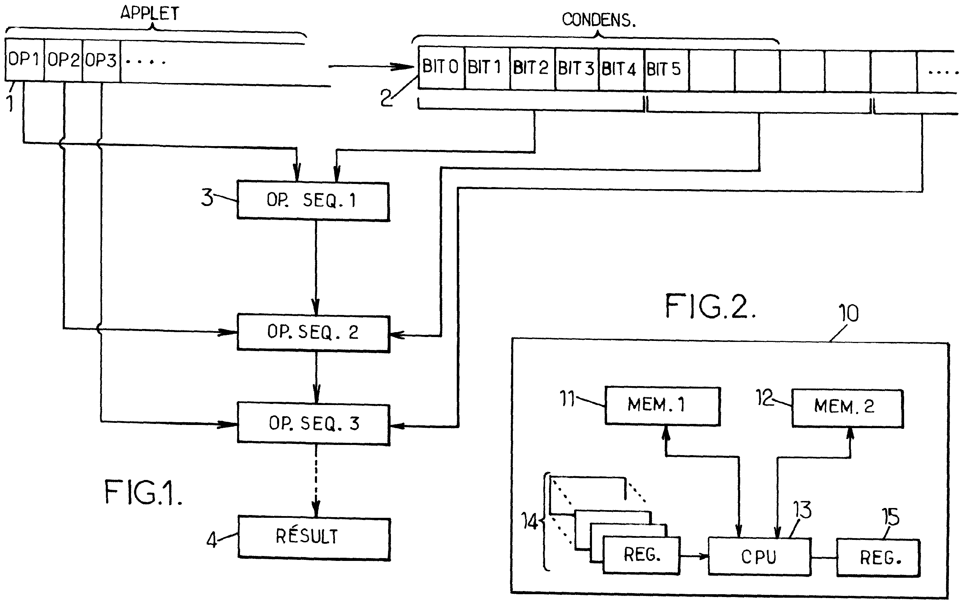

A titre d'exemple, l'invention est décrite en détail pour un dispositif du type machine virtuelle qui est adapté pour exécuter un programme présenté sous forme d'applet Java-Card. L'applet, qui est référencée 1 sur la figure 1, est alors constituée d'une succession d'instructions ordonnées, notées OP1, OP2, OP3,... De façon connue, chaque instruction du programme est un op-code qui, lors d'une exécution de l'applet par la machine virtuelle, est traduit en une série d'opérations élémentaires qui sont réalisées par un ou plusieurs processeurs de la machine virtuelle.

L'applet 1 peut être stockée dans une première mémoire de la machine virtuelle, ou être téléchargée dans celle-ci. Elle correspond à une première entrée («input» en anglais) de la machine virtuelle.

Selon l'invention, une seconde entrée correspond à un condensé de l'applet 1. Un tel condensé, référencé 2, est produit par une fonction de hachage à partir de l'applet 1 elle-même. Le principe et la mise en oeuvre d'une fonction de hachage sont supposés connus. A titre d'exemple non limitatif, une fonction de hachage qui est dérivée de la fonction SHA-1 décrite dans la norme « FIPS 180-2, Secure Hash Standard », publiée par l'organisme Federal Information Processing Standards, peut être utilisée. D'autres fonctions de hachage peuvent être utilisées de façon équivalente. Le condensé 2 est constitué d'une succession finie de bits, qui sont déterminés de façon unique à partir de l'applet 1. Ces bits sont notés BIT0, BIT1, BIT2,... Le condensé 2 peut être calculé au sein de la machine virtuelle. Alternativement, il peut être calculé en dehors de la machine virtuelle puis fourni à celle-ci. Le condensé 2 est stocké dans une seconde mémoire de la machine virtuelle.

Sur la figure 2, la machine virtuelle est référencée 10. Elle comprend la première mémoire, notée MEM.1, référencée 11 et destinée à stocker l'applet 1, la seconde mémoire, notée MEM.2, référencée 12 et destinée à stocker le condensé 2, et un processeur 13 noté CPU. Le processeur 13 a accès aux données stockées dans les mémoires 11 et 12. La machine 10 comprend en outre des registres 14, notés REG., qui spécifient, pour chaque op-code d'applet, la séquence d'opérations élémentaires qui sont à réaliser par le processeur 13 pour exécuter cet op-code.

Lors d'une exécution de l'applet 1 par la machine virtuelle 10, le processeur 13 lit chaque op-code de l'applet 1 (par exemple l'op-code OP1 sur la figure 1) dans la mémoire 11 et se reporte au registre 14 qui correspond à celle-ci. Ce registre 14 indique au processeur 13 la séquence des opérations élémentaires qui doivent être réalisées pour cet op-code. Cette séquence comprend d'une part des opérations qui sont nécessaires pour l'obtention d'un résultat de l'exécution de l'applet 1, et d'autre part des opérations qui sont inutiles par rapport à ce résultat. Ces dernières opérations n'ont qu'une fonction de brouillage des canaux cachés, en générant des signaux supplémentaires qui sont mélangés aux signaux des opérations efficaces par rapport à l'obtention du résultat. Autrement dit, les opérations inutiles, ou de brouillage, ne modifient pas le résultat de l'exécution de l'applet 1, par rapport à une exécution lors de laquelle de telles opérations ne seraient pas réalisées.

Lorsque le processeur 13 lit dans un registre 14 une commande d'opération à réaliser qui est utile par rapport au résultat de l'exécution de l'applet 1, cette opération peut être réalisée de façon usuelle, directement. Lorsque le processeur 13 lit dans le registre 14 une commande d'opération à réaliser aux fins du brouillage, il se reporte au condensé 2 qui est stocké dans la mémoire 12. L'opération de brouillage qui doit être réalisée à cet instant de l'exécution de l'op-code est alors déterminée à partir du condensé 2, selon un mode opératoire qui est prévu initialement dans la machine virtuelle 10, lors de sa fabrication. Par exemple, le processeur 13 lit dans la mémoire 12 un segment du condensé 2 qui contient plusieurs bits successifs de celui-ci. Ce segment de condensé peut être lu à la suite d'un segment lu précédemment, lors de la détermination d'une opération de brouillage réalisée antérieurement. Le segment de condensé 2 qui est lu peut être, par exemple, un segment de cinq bits successifs. En particulier, ce peut être les bits notés BIT0 à BIT4, pour un premier segment qui est lu lors de l'exécution de l'applet 1. Le condensé 2 peut être repris à son début, pour compléter un segment lu qui est coupé par la fin du condensé 2. La ou les opérations de brouillage sont sélectionnées d'après les bits du segment de condensé qui est lu. Par exemple, les trois premiers bits du segment de cinq bits peuvent être utilisés pour définir une ou plusieurs opérations de brouillage à réaliser, et les deux derniers bits du segment peuvent définir un rapport de changement de fréquence de fonctionnement du processeur 13. Les opérations de brouillage peuvent être déterminées par le processeur 13 en consultant un registre 15, noté REG., qui est interne à la machine 10 et qui indique au moins une opération de brouillage à réaliser pour chaque valeur de triplet de bits. Cette opération de brouillage peut être une lecture de mémoire morte (ROM pour «Read Only Memory» en anglais), une lecture de mémoire morte programmable effaçable électriquement (EEPROM pour «Electronically Erasable Programmable Read Only Memory»), un effacement de mémoire à accès aléatoire (RAM pour «Random Access Memory»), un calcul cryptographique, une recopie de donnée, une écriture dans une mémoire, l'activation d'une pompe de charge, etc. Elle est alors réalisée par le processeur 13. Ainsi, l'opération de brouillage est insérée parmi les opérations de l'op-code en cours de traitement qui participent réellement à l'obtention du résultat de l'exécution de l'applet 1. En outre, les opérations de brouillage qui sont introduites de cette façon dépendent elles-mêmes de l'applet qui est en cours d'exécution. Pour un même op-code, elles varient donc en fonction de l'applet qui est exécutée. Il n'est donc pas possible d'établir une correspondance entre une séquence de canal caché et un op-code.

La réalisation de la séquence des opérations qui sont indiquées dans le registre 14 pour l'op-code 1, le registre 14 étant complété par le registre 15 pour déterminer les opérations de brouillage, est poursuivie par le processeur 13 de façon identique à ce qui a été décrit ci-dessus. Sur le diagramme de la figure 1, cette étape est référencée 3 et notée OP. SEQ. 1, pour désigner la séquence d'opérations correspondant à l'op-code 1.

Lorsque le processeur 13 a terminé d'exécuter la séquence d'opérations de l'instruction OP1, il traite de la même façon les op-codes successifs de l'applet 1 (étapes notées OP. SEQ. 2 et OP. SEQ. 3). Quand tous les op-codes de l'applet 1 ont ainsi été traités et exécutés, un résultat de l'exécution de l'applet est obtenu (étape 4 notée RESULT). Ce résultat est identique à celui qui serait obtenu sans introduire d'opérations de brouillage lors du traitement de chaque op-code de l'applet.

Il est entendu que la mise en oeuvre de l'invention qui a été décrite en détail ci-dessus n'est fournie qu'à titre d'exemple illustratif. En particulier, d'autres méthodes peuvent être utilisées pour sélectionner les opérations de brouillage en fonction du condensé de l'applet.

## Revendications

1. Procédé de protection d'un programme interprété par une machine virtuelle, ledit programme (1) comprenant une succession d'instructions et chaque instruction étant traduite en une séquence d'opérations réalisées par la machine lors d'une exécution du programme, le procédé comprenant les étapes suivantes :
- obtenir un condensé du programme (2) ; et
- introduire, dans les séquences d'opérations correspondant respectivement à certaines au moins des instructions du programme, des opérations supplémentaires à réaliser lors de l'exécution de ces instructions, lesdites opérations supplémentaires ne participant pas à un résultat de l'exécution du programme, et étant sélectionnées en fonction du condensé du programme de sorte que lesdites opérations supplémentaires qui sont introduites soient constantes entre deux exécutions successives dudit programme.

2. Procédé selon la revendication 1, suivant lequel le programme (1) est une applet Java-Card, et chaque instruction du programme est un op-code.

3. Procédé selon la revendication 1 ou 2, suivant lequel certaines au moins des opérations supplémentaires sont sélectionnées dans un ensemble d'opérations comprenant une lecture de mémoire morte, une lecture de mémoire morte programmable effaçable électriquement, un effacement de mémoire à accès aléatoire, un calcul cryptographique, une recopie de donnée, une écriture dans une mémoire, l'activation d'une pompe de charge et une variation d'une fréquence de fonctionnement d'un processeur de la machine.

4. Procédé selon l'une quelconque des revendications précédentes, suivant lequel la machine virtuelle est comprise dans un équipement mobile de communication, une étiquette d'identification sans contact, un lecteur d'étiquette d'identification sans contact, une carte à puce ou un lecteur de carte à puce.

5. Procédé selon l'une quelconque des revendications précédentes, suivant lequel des opérations supplémentaires introduites successivement dans l'exécution du programme (1) sont sélectionnées en fonction de segments successifs du condensé (2), ledit condensé pouvant être repris en boucle.

6. Dispositif de type machine virtuelle (10) comportant des moyens (13) d'exécution d'une succession d'instructions d'un programme (1), lesdits moyens d'exécution comprenant :
- des moyens de lecture d'une instruction du programme ;
- des moyens de traduction de l'instruction lue en une séquence d'opérations à réaliser par le dispositif lors d'une exécution du programme ; et
- des moyens de réalisation des opérations de la séquence correspondant à l'instruction traduite;
les moyens de traduction de l'instruction comprennent eux-mêmes :
- des moyens d'obtention d'une partie au moins d'un condensé du programme (2) ; et
- des moyens de sélection d'opérations supplémentaires ne participant pas à un résultat de l'exécution du programme, lesdits moyens de sélection étant agencés pour sélectionner les opérations supplémentaires en fonction d'une partie du condensé du programme, et pour introduire lesdites opérations supplémentaires dans la séquence d'opérations à réaliser par le dispositif lors de l'exécution du programme, de sorte que lesdites opérations supplémentaires introduites soient constantes entre deux exécutions successives dudit programme.

7. Dispositif selon la revendication 6, comprenant en outre des moyens pour produire le condensé du programme (2) ou recevoir ledit condensé de la part d'une source externe audit dispositif.

8. Dispositif selon la revendication 6 ou 7, adapté pour exécuter un programme (1) présenté sous forme d'applet Java-Card, chaque instruction du programme étant un op-code.

9. Dispositif selon l'une quelconque des revendications 6 à 8, dans lequel les moyens de sélection des opérations supplémentaires sont adaptés pour sélectionner lesdites opérations supplémentaires dans un ensemble d'opérations comprenant, entre autres, une lecture de mémoire morte, une lecture de mémoire morte programmable effaçable électriquement, un effacement de mémoire à accès aléatoire, un calcul cryptographique, une recopie de donnée, une écriture dans une mémoire, l'activation d'une pompe de charge et une variation de fréquence de fonctionnement d'un processeur du dispositif.

10. Dispositif selon l'une quelconque des revendications 6 à 9, compris dans un équipement mobile de communication, une étiquette d'identification sans contact, un lecteur d'étiquette d'identification sans contact, une carte à puce ou un lecteur de carte à puce.

11. Dispositif selon l'une quelconque des revendications 6 à 10, dans lequel les moyens de sélection des opérations supplémentaires sont adaptés pour sélectionner successivement des opérations supplémentaires en fonction de segments successifs du condensé (2), ledit condensé pouvant être repris en boucle.

## Patentansprüche

1. Verfahren zum Schutz eines Programms, das von einer virtuellen Maschine interpretiert wird, wobei das Programm (1) eine Abfolge von Anweisungen umfasst und wobei jede Anweisung in eine Sequenz von Operationen übersetzt wird, die bei einer Ausführung des Programms von der Maschine umgesetzt werden, das Verfahren umfassend die folgenden Schritte:
- Erhalten eines Kondensats des Programms (2); und
- Einfügen, in die Sequenzen von Operationen, die jeweils zumindest bestimmten der Anweisungen des Programms entsprechen, von zusätzlichen Operationen, die bei der Ausführung dieser Anweisungen umzusetzen sind, wobei die zusätzlichen Operationen nicht an einem Ergebnis der Ausführung des Programms beteiligt sind, und wobei sie in Abhängigkeit von dem Kondensat des Programms ausgewählt werden, so dass die zusätzlichen Operationen, die eingefügt werden, zwischen zwei aufeinanderfolgenden Ausführungen des Programms konstant sind.

2. Verfahren nach Anspruch 1, wobei das Programm (1) ein Java-Card-Applet ist und jede Anweisung des Programms ein Opcode ist.

3. Verfahren nach Anspruch 1 oder 2, wobei bestimmte zumindest der zusätzlichen Operationen aus einer Gesamtheit von Operationen ausgewählt werden, die einen Lesevorgang eines Nur-Lese-Speichers, einen Lesevorgang eines programmierbaren Nur-Lese-Speichers, der elektrisch löschbar ist, einen Löschvorgang eines Direktzugriffsspeichers, eine kryptographische Berechnung, einen Datenkopiervorgang, einen Vorgang des Schreibens in einen Speicher, die Aktivierung einer Ladungspumpe und eine Änderung einer Betriebsfrequenz eines Prozessors der Maschine umfasst.

4. Verfahren nach einem der vorhergehenden Ansprüche, wobei die virtuelle Maschine in einem mobilen Kommunikationsgerät, einem kontaktlosen Identifikationsetikett, einem Lesegerät für kontaktlose Identifikationsetiketten, einer Chipkarte oder einem Chipkartenlesegerät enthalten ist.

5. Verfahren nach einem der vorhergehenden Ansprüche, wobei die zusätzlichen Operationen, die nacheinander in die Ausführung des Programms (1) eingefügt werden, in Abhängigkeit von aufeinanderfolgenden Segmenten des Kondensats (2) ausgewählt werden, wobei das Kondensat in einer Schleife wiederholt werden kann.

6. Vorrichtung des Typs einer virtuellen Maschine (10), umfassend Mittel (13) zur Ausführung einer Abfolge von Anweisungen eines Programms (1), die Mittel zur Ausführung umfassend:
- Mittel zum Lesen einer Anweisung des Programms;
- Mittel zur Übersetzung der gelesenen Anweisung in eine Sequenz von Operationen, die von der Vorrichtung bei einer Ausführung des Programms umzusetzen sind; und
- Mittel zur Umsetzung der Operationen der Sequenz, die der übersetzten Anweisung entspricht;
die Mittel zur Übersetzung der Anweisung umfassen selbst:
- Mittel zum Erhalten zumindest eines Teils mindestens eines Kondensats des Programms (2); und
- Mittel zum Auswählen zusätzlicher Operationen, die nicht an einem Ergebnis der Ausführung des Programms beteiligt sind, wobei die Mittel zum Auswählen angeordnet sind, die zusätzlichen Operationen in Abhängigkeit von einem Teil des Kondensats des Programms auszuwählen, und die zusätzlichen Operationen in die Sequenz von Operationen einzufügen, die von der Vorrichtung bei der Ausführung des Programms umzusetzen ist, so dass die eingefügten zusätzlichen Operationen zwischen zwei aufeinanderfolgenden Ausführungen des Programms konstant sind.

7. Vorrichtung nach Anspruch 6, ferner umfassend Mittel zum Herstellen des Kondensats des Programms (2) oder zum Erhalten des Kondensats von einer Quelle, die außerhalb der Vorrichtung gelegen ist.

8. Vorrichtung nach Anspruch 6 oder 7, die angepasst ist, ein Programm (1) auszuführen, das in der Form eines Java-Card-Applets vorliegt, wobei jede Anweisung des Programms ein Opcode ist.

9. Vorrichtung nach einem der Ansprüche 6 bis 8, wobei die Mittel zum Auswählen der zusätzlichen Operationen angepasst sind, die zusätzlichen Operationen aus einer Gesamtheit von Operationen auszuwählen, die unter anderem einen Lesevorgang eines Nur-Lese-Speichers, einen Lesevorgang eines programmierbaren Nur-Lese-Speichers, der elektrisch löschbar ist, einen Löschvorgang eines Direktzugriffsspeichers, eine kryptographische Berechnung, einen Datenkopiervorgang, einen Vorgang des Schreibens in einen Speicher, die Aktivierung einer Ladungspumpe und eine Betriebsfrequenzänderung eines Prozessors der Vorrichtung umfasst.

10. Vorrichtung nach einem der Ansprüche 6 bis 9, die in einem mobilen Kommunikationsgerät, einem kontaktlosen Identifikationsetikett, einem Lesegerät für kontaktlose Identifikationsetiketten, einer Chipkarte oder einem Chipkartenlesegerät enthalten ist.

11. Vorrichtung nach einem der Ansprüche 6 bis 10, wobei die Mittel zum Auswählen der zusätzlichen Operationen angepasst sind, nacheinander zusätzliche Operationen in Abhängigkeit von aufeinanderfolgenden Segmenten des Kondensats (2) auszuwählen, wobei das Kondensat in einer Schleife wiederholt werden kann.

## Claims

1. Method for protecting a program interpreted by a virtual machine, said program (1) comprising a series of instructions and each instruction being translated into a sequence of operations carried out by the machine when the program is being executed, the method comprising the following steps:
- obtaining a digest (2) of the program; and
- introducing, into the sequences of operations which correspond respectively to at least some of the program instructions, additional operations to be carried out while these instructions are being carried out, said additional operations not participating in a result of the program being executed and being selected as a function of the program digest so that said additional operations that are introduced are constant between two successive executions of said program.

2. Method according to claim 1, wherein the program (1) is a Java-Card applet, and each program instruction is an op-code.

3. Method according to claim 1 or 2, wherein at least some of the additional operations are selected in a set of operations comprising a ROM reading, an EEPROM reading, a RAM erasure, a cryptographic calculation, a data recopying, a writing to a memory, the activation of a charge pump and a variation of an operation frequency of a processor of the machine.

4. Method according to any one of the preceding claims, wherein the virtual machine is comprised in a mobile communication device, a contactless identification label, a contactless identification label reader, a chip card or a chip card reader.

5. Method according to any one of the preceding claims, wherein additional operations successively introduced into the execution of the program (1) are selected as a function of successive segments of the digest (2), said digest possibly re-starting in a loop.

6. Device of virtual machine (10) type comprising means (13) of execution of a series of program instructions (1), said means of execution comprising:
- means for reading a program instruction;
- means for translating the instruction read into a sequence of operations to be carried out by the device when the program is being executed; and
- means for carrying out the operations of the sequence corresponding to the translated instruction,
the means for translating the instruction themselves comprise:
- means for obtaining at least a part of a digest (2) of the program; and
- means for selecting additional operations not participating in a result of the program being executed, said means for selecting being arranged for selecting the additional operations as a function of a part of the program digest, and for introducing said additional operations into the sequence of operations to be carried out by the device when the program is being executed, so that said additional operations introduced are constant between two successive executions of said program.

7. Device according to claim 6, further comprising means for producing the program digest (2) or receiving said digest from a source external to said device.

8. Device according to claim 6 or 7, adapted for executing a program (1) arranged in a form of a Java-Card applet, each program instruction being an op-code.

9. Device according to any one of claims 6 to 8, wherein the means for selecting the additional operations are adapted for selecting said additional operations in a set of operations comprising, among others, a ROM reading, an EEPROM reading, a RAM erasure, a cryptographic calculation, a data recopying, a writing to a memory, the activation of a charge pump and a variation of an operation frequency of a processor of the device.

10. Device according to any one of claims 6 to 9, comprised in a mobile communication device, a contactless identification label, a contactless identification label reader, a chip card or a chip card reader.

11. Device according to any one of claims 6 to 10, wherein the means for selecting the additional operations are adapted for successively selecting the additional operations as a function of successive segments of the digest (2), said digest possibly re-starting in a loop.
